# EUROPÄISCHE PATENTSCHRIFT

(11) **EP 3 978 963 B1**
(45) Veröffentlichungstag und Bekanntmachung des Hinweises auf die Patenterteilung: **26.11.2025**
(21) Anmeldenummer: 21195030.8
(22) Anmeldetag: 06.09.2021
(51) Int. Cl.: G01V 3/10, G01V 3/15, G01V 3/165

(54) **METALLDETEKTOR MIT DER FUNKTION DES AUTOMATISCHEN ÜBERGANGS IN DEN ENERGIESPARZUSTAND**
METAL DETECTOR WITH AUTOMATIC TRANSITION TO ENERGY SAVING MODE
DÉTECTEUR DE MÉTAUX POURVU DE FONCTION DE TRANSITION AUTOMATIQUE DANS UN ÉTAT D'ÉCONOMIE D'ÉNERGIE

(30) Priorität: 30.09.2020 RU 2020132181
(43) Veröffentlichungstag der Anmeldung: 06.04.2022
(73) Patentinhaber: "Sphinx, Inc.", 125413 Moskau (RU)
(72) Erfinder: KRYUKOV, Alexander Sergeevich, 117152 Moskau (RU); KHAIRULIN, Pavel Aleksandrovich, 125499 Moskau (RU); KHAIRULIN, Sergej Aleksandrovich, 125499 Moskau (RU); KHAIRULIN, Aleksander Abdulmyanovich, 125581 Moskau (RU)
(74) Vertreter: Jeck, Anton

(56) Entgegenhaltungen:
- CN-B- 107 525 606
- RU-U1- 197 053

## Beschreibung

Das vorliegende Erfindung bezieht sich auf Handmetalldetektoren zum Entdecken der in dielektrischen oder elektrisch schwach leitfähigen Medien versteckten Objekte aus Nichteisen- und Eisenmetallen gemäß Anspruch 1 und kann bei der Schatzsuche, in der Archäologie, im Sicherheitsbereich (körperliche Durchsuchung, Gepäck- oder Korrespondenzkontrolle) und in anderen Bereichen verwendet werden.

Normalerweise werden solche Metalldetektoren in Form eines tragbaren Körpers zur Handverwendung ausgeführt. In diesem Körper sind ein Primärwandler und Elektronik zum Entdecken der Metallobjekte sowie eine Stromquelle angeordnet. Auf der Körperfläche sind Steuer- und Anzeigeelemente angeordnet. Handmetalldetektoren sind allgemein bekannt und in verschiedenen konstruktiven Ausführungen vorhanden. In Bezug auf die Erfindung sind die Begriffe "Metalldetektor", "Metallsucher", "Metallentdecker" und "Pinpointer" synonym.

Bekannt sind Handmetalldetektoren, die hauptsächlich zur körperlichen Durchsuchung und zur öffentlichen Sicherheit bestimmt sind: "SPHINX" VM-311 [1], HANDDETEKTOR MIT DRAHTLOSER DATENÜBERTRAGUNG UND EMPFANG [2], GARRETT SUPER SCANNER V [3], CEIA PD 240 [4].

Bibliographische Daten [1]: https://www.sphinx-md.ru/catalog/BM-311.html (Abrufdatum 09.01.2020).

Bibliographische Daten [2]: HANDDETEKTOR MIT DRAHTLOSER DATENÜBERTRAGUNG UND EMPFANG [Text]: Pat. 2714524 Rus. Föderation: G01V 3/11 (2006.01) / Khairulin Alexander Abdulmyanovich (RU), Khairulin Sergey Alexandrovich (RU), Khairulin Pavel Alexandrovich (RU), Kryukov Alexander Sergeevich (RU); Patentinhaber: Khairulin Alexander Abdulmyanovich (RU), Khairulin Sergey Alexandrovich (RU), Khairulin Pavel Alexandrovich (RU), Kryukov Alexander Sergeevich (RU); - Nr. 2019116876, 31.05.2019; veröff. 18.02.2020 Bul. Nr. 5.

Bibliographische Daten [3]: https://garrett.com/security/hand-held/super-scanner-v-hand-held-metal-detector (Abrufdatum 02.09.2020).

Bibliographische Daten [4]: https://www.ceila.net/security/product.aspx?a=PD240 (Abrufdatum 02.09.2020).

Breit bekannt sind zudem auch Handmetalldetektoren, die hauptsächlich in der Schatzsuche und Archäologie eingesetzt werden: METALLSUCHER (PINPOINTER) SPHINX 01 [5], METALLDETEKTOR MIT HERMETISCHEM KÖRPER [6], XP MI-6 [7].

Bibliographische Daten [5]: https://www.sphinx-md.ru/catalog/Pinpointer.html (Abrufdatum 09.02.2020).

Bibliographische Daten [6]: METALLDETEKTOR MIT HERMETISCHEM KÖRPER [Text]: Anmeldung 14582455: G08B 3/00, G08B 5/00, G08B 7/00, G01D 5/12, H04R 1/02 / Gerald L. Johnson (US), Robert J. Podhrasky (USA), Brent C. Weaver (USA); Anmelder: Garrett Electronics (USA); - Veröffentlichungsnummer US 9347798; angemeldet 24.12.2014; veröff. 24.05.2016; Publikationstyp B1.

Darüber hinaus sind Informationen zum METALLDETEKTOR MIT HERMETISCHEM KÖRPER auf der Website des Herstellers unter dem Link: https://garrett.com/sport/pro-pointer/pro-pointer-at (Abrufdatum 02.09.2020) präsentiert.

Bibliographische Daten [7]: http://www.xpmetaldetectors.com/metal-detector/mi-6/ (Abrufdatum 09.02.2020).

Konstruktiv und funktionell sind alle aufgelisteten bekannten Handmetalldetektoren ähnlich. Alle weisen einen Körper aus thermoplastischem Stoff zur Handverwendung auf, in dem ein Schaltschema des Metalldetektors angeordnet ist. Es weist einen Primärwandler auf und erzeugt ein elektromagnetisches Feld. Wenn da ein Metallobjekt erscheint, wird ein Notsignal erzeugt (Wirbelstromverfahren zur Erkennung der Metallobjekte). Im Körper ist auch eine Batterie angeordnet. Die Steuerelemente sind auf der Körperoberfläche angeordnet und als mechanische Knöpfe (Taster) oder Schalter ausgebildet.

Alle erwähnten Handmetalldetektoren können sich in zwei Funktionszuständen befinden: Suchzustand und Energiesparzustand. Der Übergang zwischen diesen Zuständen erfolgt ausschließlich durch Handsteuerung - durch Drücken eines mechanischen Knopfes (Tasters) oder Schalters. Der Suchzustand ist ein Betriebszustand der Vorrichtung, bei dem Metallobjekte erkannt (entdeckt) werden, wenn sie im Kontrollbereich des Metalldetektors erscheinen. Dieser Zustand ist durch maximalen Energieverbrauch der Vorrichtung gekennzeichnet. Der Energiesparzustand ist ein Zustand, in dem der Metalldetektor keine Metallobjekte entdecken kann und durch minimalen Energieverbrauch der Vorrichtung gekennzeichnet ist. In einigen Vorrichtungen wird der Übergang zum Aus-Zustand statt zum Energiesparzustand ausgeführt. Der Unterschied zwischen dem Energiesparzustand und dem Aus-Zustand besteht darin, dass im Aus-Zustand alle Metalldetektorblöcke stromlos sind und Energie der Stromquelle nicht verbraucht wird. Im Energiesparzustand funktionieren die Metalldetektorblöcke im "Schlafmodus" weiter oder sind teilweise stromlos. Ein Vorteil des Energiesparzustands gegenüber dem Aus-Zustand ist eine kürzere Übergangszeit der Vorrichtung zum Betriebszustand durch vollständiges oder teilweises Fehlen der Übergangsprozesse in den Stromkreisen.

Zur Energieeinsparung der Stromquelle eines Metalldetektors schaltet der Benutzer den Metalldetektor normalerweise vom Energiesparzustand zum Betriebszustand und umgekehrt. Zum Beispiel kann der Benutzer aus Sicherheitsgründen, um Energie zu sparen, die Vorrichtung zum Energiesparzustand umstellen, wenn keine körperliche Durchsuchung erforderlich ist, und die Vorrichtung zum Betriebszustand umstellen, wenn eine Durchsuchung schnell erforderlich ist. Bei einer großen Anzahl von durchsuchbaren Personen kann der Prozess des Handumstellens eines Metalldetektors von einem Zustand in einen anderen einen erheblichen Teil der Zeit in Anspruch nehmen, die direkt für die Durchsuchung verwendet werden könnte. Häufig wird der Metalldetektor zu diesem Zweck vom Benutzer bewusst nicht zum Energiesparzustand umgestellt, auch wenn keine Durchsuchung erforderlich ist, was sich negativ auf die Energieeffizienz des Metalldetektors auswirkt.

Im Bereich der Schatzsuche ist das Problem genauso akut, da das Ergebnis direkt von der Suchleistung abhängt. In der Regel sind tragbare Handmetalldetektoren bei der Schatzsuche Hilfsvorrichtungen und werden in eine eigene Klasse eingeordnet, die "Pinpointer" heißt. Der Benutzer sucht mit dem Handmetalldetektor mit einer Stange (Stab), der einen größeren Scanbereich hat als ein tragbarer Handmetalldetektor. Ein tragbarer Metalldetektor wird zur Lokalisierung eines Metallobjekts verwendet, das vom Metalldetektor auf einer Stange entdeckt wird. Je weniger Zeit der Benutzer für Manipulationen verbraucht, die mit der Steuerung und Einstellung des Handmetalldetektors verbunden sind, desto mehr Fläche kann er in der gleichen Zeit untersuchen.

Somit gehört zu den schwachen Merkmalen bekannter Handmetalldetektoren die Notwendigkeit des Handumstellens einer Vorrichtung vom Betriebszustand zum Energiesparzustand und umgekehrt, um Energie der Stromquelle zu sparen.

In der Regel hat jeder Metalldetektor unabhängig vom Einsatzbereich seinen eigenen Platz zum Lagern und Tragen. Dies können spezielle Hüllen/Bezüge (Holster, Clips usw.) zum Tragen und Lagern des Metalldetektors sein, wenn er nicht verwendet wird. Die Bezüge können unterschiedliche Konfigurationen haben und zur Anwenderfreundlichkeit am Gürtel des Benutzers, am Bein, am Handmetalldetektor mit einem Stab befestigt werden oder Teil einer Tasche sein. Ein Beispiel einer Hülle für einen Handmetalldetektor kann eine Hülle für einen Handmetalldetektor Sphinx 01 sein [8].

Bibliographische Daten [8]: https://www.sphinx-md.ru/catalog/Pinpointer.html#gallery-5 (Abrufdatum 18.09.2020).

Bei der Sicherstellung verschiedener Objekte an Kontrollpunkten, an denen Handmetalldetektoren verwendet werden, werden Plätze für deren Lagern organisiert. Ein Beispiel für die Organisation eines solchen Platzes ist ein Ständer zum Aufladen der Handmetalldetektoren SPHINX "PLATFORM" [9].

Bibliographische Daten [9]: https://www.sphinx-md.ru/catalog/Platforma.html (Abrufdatum 18.09.2020).

In der Regel handelt der Benutzer bei der Suche nach Metallobjekten nach folgendem Algorithmus, unabhängig vom Anwendungsbereich des Metalldetektors:
1. Herausnehmen des Metalldetektors aus dem Lagerplatz;
2. Handumstellen des Metalldetektors in den Suchzustand;
3. Suche nach einem Metallobjekt;
4. Handumstellen des Metalldetektors in den Energiesparzustand;
5. Anordnung des Metalldetektors am Lagerplatz.

Das automatische Umstellen in den Betriebszustand und den Energiesparzustand eines Handmetalldetektors bei seinem Herausnehmen und seiner Anordnung am Lagerplatz ermöglicht es, Punkt 2 und Punkt 4 aus dem Arbeitsalgorithmus des Benutzers auszuschließen und dadurch erheblich Zeit bei der Suche der Metallobjekte zu sparen und die Energieeffizienz der Vorrichtung zu erhöhen, was bereits erwähnt wurde. Zur Ausführung dieser technischen Lösung ist die Verbindung zwischen dem Lagerplatz und dem Handmetalldetektor erforderlich. Dank dieser Verbindung kann der Metalldetektor eindeutig feststellen, ob er am Lagerplatz angeordnet ist oder verwendet wird.

Darüber hinaus verfügen die oben erwähnten Schatzsucher [5], [6] und [7] über einen Schutzgrad gegen das Eindringen von Fremdkörpern und Wasser entsprechend IP68, was die Verwendung dieser Vorrichtungen unter Wasser ermöglicht. Die zulässige Eintauchtiefe wird vom Hersteller festgelegt und durch die Tiefe begrenzt, bei der die Steuerknöpfe des Metalldetektors unter Wasserdruckeinfluss geklemmt werden. In der Regel beträgt die Tiefe, bei der ein solcher Metalldetektor verwendet werden kann, nicht mehr als 12 m. So begrenzt die Verwendung mechanischer Tasten (Knöpfe) als Steuerelemente bei Handmetalldetektoren und das Fehlen alternativer Steuerungsverfahren den Tiefenbereich bei der Verwendung des Metalldetektors unter Wasser.

Die nächstliegende Lösung nach dem technischen Wesen und dem Komplex technischer Merkmale ist der HANDMETALLDETEKTOR zur Inspektion [10]. Der HANDMETALLDETEKTOR weist neben einer elektrischen Schaltung zur Entdeckung der Metallobjekte einen Akzelerometer (Beschleunigungsmesser) auf. Er bestimmt automatisch, wann der Metalldetektor direkt für Inspektionsoperationen verwendet wird (in Bewegung ist) und wann der Metalldetektor nicht verwendet wird (im Ruhezustand ist). Im Ruhezustand des Metalldetektors (Inspektion wird nicht durchgeführt) schaltet der Mikrocontroller nach dem Signal des Beschleunigungsmessers die Stromversorgung des Hauptteils der Schaltung aus, wodurch der Stromverbrauch erheblich reduziert wird. Der Metalldetektor weist zusätzlich magnetoresistive Sensoren des konstanten Magnetfelds auf, die ausschließlich zur Entdeckung von verbotenen ferromagnetischen Objekten bei der Inspektion verwendet werden.

Bibliographische Daten [10]: HANDMETALLDETEKTOR [Text]: Pat. 175760 Rus. Föderation: G01V 3/11 (2006.01) / Aleev Timur Marsovich (RU); Anmelder und Patentinhaber: Aleev Timur Marsovich (RU); - Nr. 2017121519; App. 19.06.2017; veröff. 18.12.2017 Bul. Nr. 35.

Das Hauptmerkmal, das den Effekt der Energieverbrauchssenkung durch die Verwendung des Beschleunigungsmessers nivelliert, besteht darin, dass für den Beschleunigungsmesser die Inspektion und die Tatsache einer Bewegung des Metalldetektors identische Prozesse sind. In vielen Fällen (z. B. zwischen der Inspektion oder im Bereich der Schatzsuche im Moment der Verwendung eines Handmetalldetektors mit einem Stab) bewahrt der Benutzer den Handmetalldetektor in einer Hülle auf, die am Körper befestigt ist. Somit ist der Metalldetektor auch dann immer in Bewegung, wenn keine Inspektion durchgeführt wird, und das Umstellen zum Energiesparzustand ist nicht möglich.

Aus RU197053U1 ist ein Metalldetektor mit hermetischem Gehäuse, schallübertragender Membran bekannt, der sowohl in einem statischen als auch im dynamischen Modus betrieben werden kann.

Aus CN107525606B ist ein tragbares Gerät mit einem nicht-kontaktierenden induktiven Koppelelement, das zwischen einem Schlaf- und einem Normalmodus wechselt, abhängig davon, ob es sich in einer dafür vorgesehenen Aufbewahrungsbox befindet.

Aufgabe der technischen Lösung ist das Erstellen eines Metalldetektors, der bei Einwirkung eines externen lokalen Magnetfelds ohne weiteres Zutun durch den Benutzer automatisch in den Energiesparzustand umgestellt wird und bei Verwendung eines externen lokalen Magnetfelds ohne weiteres Zutun durch den Benutzer in den Betriebszustand automatisch umgestellt wird.

Das technische Ergebnis besteht in der:
- Erhöhung der Geschwindigkeit und Produktivität der Suche nach Metallobjekten durch Fehlen von weiterem Zutun durch den Benutzer zur Handumstellung des Metalldetektors vom Energiesparzustand zum Betriebszustand und umgekehrt beim Betrieb der Vorrichtung,
- Erhöhung der Energieeffizienz des Metalldetektors durch automatisches Umstellen in den Energiesparzustand und
- Vergrößerung des Tiefenbereichs bei Verwendung des Metalldetektors unter Wasser dadurch, dass keine mechanischen Tasten verwendet werden müssen, die unter Wasserdruck in der gedrückten Position bleiben.

Das technische Ergebnis wird dadurch sichergestellt, dass der HANDMETALLDETEKTOR MIT DER FUNKTION DES AUTOMATISCHEN ÜBERGANGS IN DEN ENERGIESPARZUSTAND umfasst:
einen Primärwandler, eine elektronische Schaltung des Metalldetektors und eine Stromquelle, die in einem tragbaren Körper angeordnet sind, sowie einen Block zum Bestimmen eines externen lokalen Magnetfelds, aufweisend ein magnetisch empfindliches System. Unter Einwirkung eines externen lokalen Magnetfelds wird der Metalldetektor in den Energiesparzustand umgestellt.

Im Einzelfall kann der Metalldetektor durch die Wirkung des Vorhandenseins eines externen lokalen Magnetfelds auf die Einheit zur Erkennung des Vorhandenseins eines externen lokalen Magnetfeldes (7), die das magnetisch empfindliche System hält, gesteuert werden.

Der Aufbau und die Funktionsweise des HANDMETALLDETEKTORS MIT DER FUNKTION DES AUTOMATISCHEN ÜBERGANGS IN DEN ENERGIESPARZUSTAND wird durch nachfolgende Figuren erklärt.

Es zeigen:
Fig. 1 ein Blockschaltbild des Handmetalldetektors,
Fig. 2 eine allgemeine Ansicht des Handmetalldetektors, wobei:
   1 - Induktivitätsspule des Primärwandlers des Metalldetektors,
   2 - Autogenerator,
   3 - Amplitudendetektor,
   4 - Mikrocontroller,
   5 - Stromquelle,
   6 - Spannungsstabilisator,
   7 - Block zum Bestimmen des externen lokalen Magnetfelds,
   8 - Handsteuer- und Anzeigeblock,
   9 - elektronische Schaltung des Metalldetektors
   10 - Suchelement des Körpers,
   11 - Klappe des Batteriefachs,
   12 - Steuerknopf (-taste) des Metalldetektors,
   13 - akustische Kammer,
   14 - Versteifungsrippe,
   15 - Öse zum Befestigen eines Riemens (Streifen, Gurt),
   16 - Lichtleiter,
   17 - magnetempfindliches System,
   18 - Leiterplatte,
   19, 20 - Hall-Sensor 1, Hall-Sensor 2 entsprechend und
   21 - Permanentmagnet sind.
   22 - Metalldetektorgehäuse aus thermoplastischem Material;

Der Metalldetektor wird in einem tragbaren Körper zur Handhaltung ausgeführt, in dem eine elektronische Schaltung des Metalldetektors, ein primärer Wirbelstromwandler mit mindestens einer Induktivitätsspule, eine Stromquelle und ein Block zum Bestimmen eines externen lokalen Magnetfeldes angeordnet sind. Der primäre Wirbelstromwandler kann absolut oder transformatorisch, differenziell oder parametrisch ausgeführt sein. Im Griff des Detektors ist ein Fach zur Anordnung einer wiederaufladbaren oder einmaligen Stromquelle ausgeführt. Auf der Außenseite des Körpers ist mindestens ein Handsteuerungsorgan für den Metalldetektor angeordnet. Als Handsteuerungsorgan können eine mechanische Takttaste, eine Sensor-Taste, ein Tastenumschalter usw. verwendet werden. Mit einem Handsteuerungselement kann der Metalldetektor ein-/ausgeschaltet werden, sein Betriebsmodus und die Empfindlichkeitsstufe können gewählt werden, die Lampe kann ein-/ausgeschaltet werden usw. Mehrere Handsteuerungselemente können verwendet werden, jedes von ihnen erfüllt eine einzelne Funktion. Zur Anzeige der Betriebsmodi des Metalldetektors und zur Anzeige des Vorhandenseins von Metallobjekten können Leuchtdioden, akustische und taktile Anzeiger in verschiedenen Kombinationen und Ausführungen verwendet werden.

Im Gegensatz zu den bekannten technischen Lösungen gibt es beim HANDMETALLDETEKTOR MIT DER FUNKTION DES AUTOMATISCHEN ÜBERGANGS IN DEN ENERGIESPARZUSTAND eine Verbindung zwischen dem Lagerplatz und dem Handmetalldetektor. Dank dieser Verbindung kann der Metalldetektor eindeutig feststellen, ob er am Lagerplatz angeordnet ist oder verwendet wird.

Der HANDMETALLDETEKTOR MIT DER FUNKTION DES AUTOMATISCHEN ÜBERGANGS IN DEN ENERGIESPARZUSTAND umfasst einen Primärwandler, eine elektronische Schaltung des Metalldetektors und eine Stromquelle, die in einem tragbaren Körper angeordnet sind, sowie einen Block zum Bestimmen eines externen lokalen Magnetfelds, aufweisend ein magnetisch empfindliches System. Unter Einwirkung auf den Metalldetektor eines externen lokalen Magnetfelds wird der Metalldetektor in den Energiesparzustand umgestellt.

Im Einzelfall kann der Metalldetektor durch die Wirkung eines externen lokalen Magnetfelds auf die Einheit zur Erkennung des Vorhandenseins eines externen lokalen Magnetfeldes (7), die das magnetisch empfindliche System hält, gesteuert werden.

Die Verbindung zwischen dem Handmetalldetektor und seinem Lagerplatz ist magnetisch. Für ihre Ausführung wird am Lagerplatz des Metalldetektors eine lokale Magnetfeldquelle angeordnet. Der Lagerplatz des Metalldetektors kann sowohl stationär (z. B. ein an der Wand befestigtes Stativ ) als auch tragbar (z. B. eine individuelle Hülle ) sein.

Der Block zum Bestimmen des externen lokalen Magnetfelds des Handmetalldetektors wird mit einem magnetisch empfindlichen System ausgestattet, dessen empfindliche Elemente im Körper des Metalldetektors in dem Teil angeordnet sind, die der Quelle des lokalen magnetischen Felds bei der Anordnung der Vorrichtung in den Lagerplatz gegenüberliegt. Wenn der Metalldetektor also in den Lagerplatz angeordnet wird, erkennt das magnetisch empfindliche System das Vorhandensein eines lokalen Magnetfeldes, das von der Magnetfeldquelle erzeugt wird. Das System erzeugt ein Signal, das von der elektronischen Schaltung des Metalldetektors verwendet werden kann, um den Lagerplatz zu erkennen und den Metalldetektor je nach Art der empfindlichen Elemente des magnetisch empfindlichen Systems in den Energiesparzustand oder Aus-Zustand umzustellen. Wenn der Metalldetektor aus dem Lagerplatz herausgenommen wird, verschwindet das auf das magnetisch empfindliche System wirkende lokale Magnetfeld, was zum Umstellen des Metalldetektors in den Betriebszustand führt.

Als empfindliche Elemente eines magnetisch empfindlichen Systems können alle elektronischen Komponenten verwendet werden, die das Vorhandensein eines Magnetfelds erkennen können. Die häufigsten sind:
- Reed-Schalter;
- magnetoresistive Wandler;
- Hall-Sensoren (Wandler).

Durch physische Kontakttrennung bei Einwirkung eines externen lokalen Magnetfelds ermöglicht die Verwendung von Reed-Schaltern, den Metalldetektor nicht nur in den Energiesparzustand, sondern auch in den Aus-Zustand umzustellen. Diese Eigenschaft wirkt sich positiv auf die Energieeffizienz des Handmetalldetektors aus, da alle Elemente seines Schemas stromlos werden. Reed-Schalter haben jedoch eine Reihe von Nachteilen, die die Zuverlässigkeit des Metalldetektors insgesamt negativ beeinflussen können. Die wichtigsten davon sind: Zerbrechlichkeit (Reed-Schalter) können bei starken Vibrationen und Stoßbelastungen nicht verwendet werden), Kontaktprellen wegen ihrer hohen Elastizität, begrenzte Ansprechgeschwindigkeit, Möglichkeit des Zusammenschmorens von Kontakten nach mehreren Betätigungen, geringe Empfindlichkeit zum Magnetfeld.

Magnetoresistive Wandler weisen keine der Hauptnachteile von Reed-Schaltern auf, aber sie haben eine Reihe von Merkmalen, die ihre Verwendung in einem magnetisch empfindlichen Metalldetektorsystem auch einschränken. Magnetoresistive Wandler zur Detektion eines externen lokalen Magnetfeldes benötigen eine konstante Stromversorgung, daher ist es möglich, den Metalldetektor nur in den Energiesparzustand umzustellen. Gleichzeitig haben moderne magnetoresistive Wandler einen niedrigen Betriebsstrom, wodurch sie effektiv in batteriebetriebenen Geräten verwendet werden können. Darüber hinaus haben magnetoresistive Wandler eine zu hohe Empfindlichkeit zur Lösung der gestellten Aufgabe für die Änderung des äußeren Magnetfelds, wodurch es möglich wird, dass der Metalldetektor bei der Verwendung der Vorrichtung versehentlich in den Energiesparzustand umgestellt wird, beispielsweise durch den Einfluss verschiedener Arten von Elektromotoren, die in der Nähe funktionieren, oder durch lokale Einwirkungen des Erdmagnetfelds.

Wie magnetoresistive Wandler benötigen auch Hall-Wandler eine konstante Stromversorgung. Ihre Energieeffizienz ist jedoch höher, was bei der Verwendung in batteriebetriebenen Geräten von Vorteil ist. Die Empfindlichkeit zur Änderung des externen Magnetfelds der Hall-Wandler ist für die Lösung der gestellten Aufgabe optimal und minimiert ein mögliches versehentliches Umstellen des Metalldetektors in den Energiesparzustand bei der Verwendung des Geräts.

Als Quelle eines lokalen Magnetfelds, das am Lagerplatz des Handmetalldetektors angeordnet wird, kann ein Permanentmagnet (z. B. Ferrit oder Neodym) oder ein Elektromagnet verwendet werden. Die Hauptanforderung an die Quelle eines lokalen Magnetfelds ist die Sicherstellung einer zum Bestimmen durch das magnetisch empfindliche System des Metalldetektors ausreichenden magnetischen Induktionsgröße am Platz ihrer Anordnung bei der Lagerung des Geräts.

Der HANDMETALLDETEKTOR weist auf: eine auf den Ferritkern gewickelte Induktivitätsspule 1, die als parametrischer Wirbelstromwandler verwendet wird, einen Autogenerator 2, einen Amplitudendetektor 3, einen Mikrocontroller 4, einen Handsteuer- und Anzeigeblock 8, einen Spannungsstabilisator 6, eine Stromquelle 5 und einen Block zum Bestimmen des externen lokalen Magnetfelds 7, die in einem einzigen tragbaren Körper 22 verbunden sind, angepasst für die Handverwendung.

Der Wirbelstromwandler ist an den Autogenerator 2 angeschlossen, dessen Ausgang an den Eingang des Amplitudendetektors 3 angeschlossen ist, dessen Ausgang mit dem ersten Eingang des Mikrocontrollers 4 verbunden ist. Der erste Ausgang des Mikrocontrollers 4 ist mit dem ersten Eingang des Oszillators 2 für seine Einstellung verbunden. Die Stromquelle 5 wird an den Eingang des Spannungsstabilisators 6 angeschlossen, dessen erster Ausgang mit dem zweiten Eingang des Autogenerators 2 verbunden ist. Der zweite Ausgang ist mit dem zweiten Eingang des Mikrocontrollers 4 verbunden, und der dritte Ausgang ist mit dem ersten Eingang des Handsteuer- und Anzeigeblocks 8 verbunden. Der zweite Ausgang des Mikrocontrollers 4 ist mit dem zweiten Eingang des Handsteuer- und Anzeigeblocks 8 verbunden, dessen Ausgang mit dem dritten Eingang des Mikrocontrollers 4 verbunden ist. Der Ausgang des Blocks zum Bestimmen des externen lokalen Magnetfelds 7 wird an den vierten Eingang des Mikrocontrollers 4 angeschlossen und der Eingang an den vierten Ausgang des Spannungsstabilisators 6.

Der Wirbelstromwandler ist im Suchelement des Körpers 10 angeordnet, was eine freie Abtastung der kontrollierbaren Oberfläche ermöglicht. Die Stromquelle 5 wird in der Rückseite des Körpers angeordnet, vorbestimmt zum Handhalten (der Griff des Körpers) und wird durch die Klappe des Batteriefachs 11 verschlossen. Die Dichtigkeit zwischen der Klappe des Batteriefachs 11 und dem Körper 22 wird durch einen Dichtungsring sichergestellt.

Im Teil des Körpers zwischen dem Batteriefach und dem Suchelement ist die elektronische Schaltung des Metalldetektors angeordnet. Der Metalldetektor wird über eine Taste (einen Knopf) 12 gesteuert, die (der) im Handsteuer- und Anzeigeblock 8 angeordnet ist.

Direkt unter der Nische der akustischen Kammer 13, die eine Membran aufweist, ist ein elektromagnetischer akustischer Wandler angeordnet, der ein Bestandteil des Handsteuer- und Anzeigeblocks 8 ist. Die Frequenz des in den akustischen Wandler kommenden Schwingungssignals wird vom Mikrocontroller 4 eingestellt.

An der Anschlussstelle des Suchelementes 10 zum Griff des Metalldetektors ist ein Lichtleiter 16 angeordnet, der durch eine Durchgangsöffnung im Körper 22 hindurchgeht. Die Dichtigkeit zwischen dem Lichtleiter 16 und dem Körper 22 wird durch einen Dichtungsring sichergestellt. Im Körper, neben dem Lichtleiter 16, auf der Platte 18 sind zwei Leuchtdioden angeordnet, die ein Bestandteil des Handsteuer- und Anzeigeblocks 8 sind. Eine von ihnen hat eine weiße Leuchtfarbe, und die zweite ist zweifarbig und hat eine grüne und eine rote Leuchtfarbe. Die Verwendung einer Kombination von Leuchtdioden der beschriebenen Art ermöglicht es, nicht nur die Funktion einer Lampe zur Beleuchtung des Suchbereichs oder eines gefundenen Metallobjekts bei schlechten Lichtbedingungen zu realisieren, sondern auch einen maximalen Informationsgehalt über die Betriebsarten der Vorrichtung zu erhalten. Um den elektrischen Energieverbrauch zu minimieren, werden vorzugsweise ultrahelle Leuchtdioden in Verbindung mit einer Pulsstromversorgung verwendet.

Auf der Außenfläche des Körpers 22 ist in seiner Rückseite eine Öse zum Befestigen eines Riemens 15 angeordnet. Außerdem gibt es auf der Außenfläche des Körpers 22 in seinem zerbrechlichsten und der äußeren mechanischen Einwirkung ausgesetzten Teil (entlang des Suchelements 10) eine Versteifungsrippe 14, die zur Vorderseite des Körpers 22 übergeht. Die Versteifungsrippe 14 weist entlang des Suchelements eine variable Höhe und die größte Festigkeit in der Nähe der Vorderseite des Körpers 22 auf.

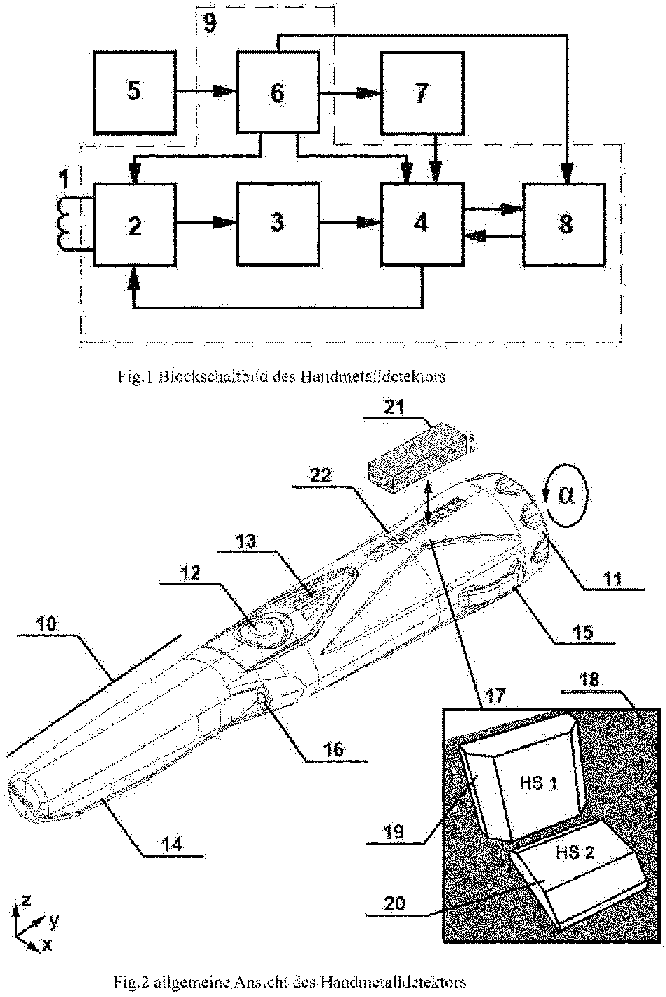

Der Block zum Bestimmen des externen lokalen Magnetfelds 7 weist ein magnetosensitives System 17 auf. Als magnetisch sensitive Elemente werden omnipolare Hall-Digital-Wandler 19, 20 verwendet. Um den Einfluss der Orientierung (Drehung um den Winkel α in der Fig. 2) des Handmetalldetektors bei seiner Anordnung in den Lagerplatz auszuschließen, werden im magnetisch empfindlichen System zwei Hallwandler HW 1 19 und HW 2 20 verwendet, deren Flächen gegenseitig senkrecht sind. HW 1 und HW 2 sind in der ZX-Fläche in der Mitte der Vorrichtung angeordnet, so dass HW 1 die X-Komponente des Magnetfelds registriert und HW 2 die Z-Komponente des Magnetfelds.

Bei der beschriebenen Konfiguration der Hall-Wandler sollte eine lokale Magnetfeldquelle, die am Lagerplatz des Handmetalldetektors angeordnet wird, die Richtung der magnetischen Induktionskraftlinien senkrecht zur Y-Achse sicherstellen. Angesichts der Einfachheit, Zuverlässigkeit und Wirtschaftlichkeit ist die beste Variante für eine lokale Magnetfeldquelle ein Permanentferritmagnet 21. In der Fig. 2 sind mit den Buchstaben S und N ein Süd- und Nordpol des Permanentmagnets 21 entsprechend bezeichnet. Der Magnet ist in dem Teil des Lagerplatzes des Metalldetektors angeordnet, gegenüber dem sich das magnetisch empfindliche System des Metalldetektors befindet, wenn dieser in dem Lagerplatz angeordnet wird. Bei jedem Winkel α bestimmt mindestens einer der beiden Hall-Wandler das Vorhandensein eines externen lokalen Magnetfelds des Magnets 21, der am Lagerplatz angeordnet ist.

Das Betriebsprinzip des Metalldetektors basiert auf dem harmonischen Wirbelstromverfahren zur Entdeckung versteckter Metallobjekte. Beim Auftreten eines Metallobjekts im Kontrollbereich des Suchelements 10 des Metalldetektors wird das Objekt von einem primären elektromagnetischen Wechselfeld beeinflusst. Da alle Metallarten (Bunt- und Eisen) eine hohe elektrische Leitfähigkeit aufweisen, werden im Objekt unter der Wirkung des Primärfelds Wirbelströme gebildet, die ein sekundäres elektromagnetisches Feld erzeugen, das die Amplitude des harmonischen Signals des Autogenerators 2 ändert. Diese Änderung wird von einem Amplitudendetektor 3 detektiert und von einem Mikrocontroller 4 fixiert. Wenn die Amplitudenänderung größer als ein vorbestimmter fester Wert ist, wird die Signalisation zur Entdeckung der Metallobjekte ausgelöst.

Der Metalldetektor wird mit einem Knopf (einer Taste) 12 gesteuert. Um die Vorrichtung einzuschalten, sollte man die Taste 12 einmal drücken. Nach dem Einschalten der Vorrichtung leuchtet die zweifarbige Leuchtdiode grün und signalisiert das Vorhandensein von Strom. Beim Auftreten eines Metallobjekts in der Nähe des Suchelements wird eine akustische und/oder taktile Signalisation eingeschaltet. Das Tonsignal hat eine konstante Tonfrequenz, aber die Folgefrequenz akustischer oder taktiler Signale nimmt je nach der Annäherung des Suchelementes zu einem Metallobjekt zu. Wenn ein Metallobjekt eine große Fläche hat oder in der Nähe des Suchelements angeordnet ist, wird ein akustisches oder taktiles Signal konstant. Wenn das Metallobjekt von dem Suchelement entfernt wird, wird die Signalisation zur Entdeckung der Metallobjekte ausgeschaltet.

Um das Signalisierungsverfahren (akustisch und taktil oder nur taktil) und das Empfindlichkeitsniveau zu ändern, sollte man die Taste im eingeschalteten Zustand drücken und gedrückt halten, bis das zweite Tonsignal erscheint und dann die Taste (Knopf) loslassen. Der Metalldetektor befindet sich im Menü zur Auswahl des Signalisierungsverfahrens und des Empfindlichkeitsniveaus. Die Umschaltung aller möglichen Modi erfolgt "im Kreis (umlaufend)" durch einmaliges Drücken der Taste. Nach der Wahl des gewünschten Modus sollte man zum Verlassen des Menüs auf das Erscheinen eines Tonsignals warten, welches von dem Verlassen des Menüs und den Übergang des Metalldetektors in den Betriebszustand mit dem ausgewählten Signalisierungsverfahren und Empfindlichkeitsniveau zeugt.

Der Metalldetektor hat drei feste Empfindlichkeitsniveaus und ein vom Benutzer konfigurierbares Niveau. Zum Übergang in den Einstellungsmodus des Empfindlichkeitsniveaus des Benutzers sollte man die Taste im eingeschalteten Zustand drücken und gedrückt halten, bis das dritte Tonsignal erscheint. Die Taste (Knopf) loslassen. Der Metalldetektor befindet sich im Einstellungsmodus des Empfindlichkeitsniveaus des Benutzers. Um das Empfindlichkeitsniveau des Benutzers einzustellen, sollte man ein zu suchendes Metallobjekt oder ein gleichwertiges Objekt in Größe und elektrischer Leitfähigkeit nehmen und es in der erforderlichen Detektierungsentfernung zum Suchelement 10 näherbringen. Danach sollte man die Taste 12 einmal drücken. Das Empfindlichkeitsniveau des Benutzers entspricht der Entfernung, in der das Zielobjekt beim Drücken der Taste angeordnet war. Dann sollte man den Metalldetektor durch Halten der Taste bis zum ersten Tonsignal ausschalten. Dabei wird das Empfindlichkeitsniveau des Benutzers im energieunabhängigen Speicher des Mikrocontrollers 4 gespeichert.

Bei der Suche nach Metallobjekten in inhomogenen Medien mit Einschlüssen mit geringer elektrischer Leitfähigkeit (z. B. Bodenmineralisierung) können Fehlauslösungen auftreten. Um den Einfluss der Umgebung auf den Betrieb des Metalldetektors zu minimieren, verfügt die Vorrichtung über eine Funktion der "Selektion" von Störfaktoren, zum Beispiel vom Boden, die durch einen einmaligen Tastendruck im eingeschalteten Zustand in der Umgebung ausgeführt wird, in der die Suche durchgeführt wird. Durch einzigen Tastendruck kann die elektronische Schaltung des Metalldetektors die aktuellen Umgebungsbedingungen einstellen (z. B. für das aktuelle Niveau der Bodenmineralisierung) und funktioniert entsprechend diesen Bedingungen weiter.

Zur Aktivierung/Deaktivierung der Funktion des automatischen Übergangs in den Energiesparzustand bei der Anordnung des Metalldetektors ohne benutzerdefinierte Aktionen und des automatischen Übergangs des Metalldetektors in den Betriebszustand ohne benutzerdefinierte Aktionen sollte man die Taste im Betriebszustand drücken und gedrückt halten, bis das vierte Tonsignal erscheint. Die Taste loslassen. Die Funktion ist aktiviert, wenn sie zuvor deaktiviert wurde und umgekehrt. Man kann überprüfen, ob die Funktion des automatischen Übergangs in den Energiesparzustand aktiviert ist, indem der Metalldetektor in den Lagerplatz mit einer installierten lokalen Magnetfeldquelle angeordnet wird. Wenn die Funktion aktiviert ist, so gibt der Metalldetektor bei der Anordnung des Handmetalldetektors in den Lagerplatz ein kurzes akustisches Signal und ein taktiles Signal ab und wird in den Energiesparzustand umgestellt. Ist die Funktion deaktiviert, bleibt der Metalldetektor bei der Anordnung in den Lagerplatz im Betriebszustand und kann über die Detektierung elektrisch leitfähiger Bauelemente signalisieren, wenn sie am Lagerplatz vorhanden sind.

Bei der Anordnung des Handmetalldetektors in den Lagerplatz ist das magnetischempfindliche System 17 des Metalldetektors gegenüber dem Permanentmagneten 21 angeordnet, der sich am Lagerplatz befindet, wobei mindestens bei einem der Hallwandler 19, 20 am Ausgang ein Signal erscheint, das von der Anordnung des Metalldetektors in den Lagerplatz zeugt. Dieses Signal wird von der Metalldetektor-Elektronik bearbeitet, und bei aktivierter Funktion des automatischen Übergangs in den Energiesparzustand wird der Metalldetektor in den Energiesparzustand umgestellt. Der Metalldetektor bleibt in diesem Zustand, bis das Signal von den Hall-Wandlern verschwindet. Beim Herausnehmen des Metalldetektors aus dem Lagerplatz wird der Autogenerator 2 automatisch eingestellt, und der Metalldetektor wird in den Betriebszustand umgestellt.

Ein Merkmal dieser Funktion ist die Möglichkeit, den Handmetalldetektor mit einem externen lokalen Magnetfeld zu steuern, ohne Organe der Handsteuerung zu verwenden. Dafür sollte man die Funktion des automatischen Übergangs in den Energiesparzustand aktivieren und dann dreimal innerhalb von 5 Sekunden den Metalldetektor anordnen und aus dem Lagerplatz herausnehmen. Eine Alternative besteht darin, innerhalb von 5 Sekunden dreimal die Quelle eines externen lokalen Magnetfelds (Permanentmagnet) näher an den Metalldetektor zu bringen. Dabei fixiert die elektronische Schaltung des Metalldetektors innerhalb von 5 Sekunden drei Signale von dem magnetisch empfindlichen System 17. In diesem Fall reagiert der Metalldetektor nicht mehr auf das Drücken der Taste 12.

Die "Selektion" von den Störfaktoren erfolgt in diesem Modus automatisch bei jedem Herausnehmen des Metalldetektors aus dem Lagerplatz. Damit der Metalldetektor empfindlich für das Drücken der Taste 12 wird, sollte man den Metalldetektor dreimal innerhalb von 5 Sekunden anordnen und aus dem Lagerplatz herausnehmen (oder einen Permanentmagneten näherbringen). Somit wird es möglich, durch ein externes lokales Magnetfeld den Übergang des Metalldetektors von dem Betriebszustand in den Energiesparzustand und umgekehrt sowie eine " Selektion " von Störfaktoren durchzuführen. Ein Beispiel für die Möglichkeit, den Handmetalldetektor mit einem externen lokalen Magnetfeld zu steuern, ohne Organe der Handsteuerung zu verwenden, ist der Einsatz des Handmetalldetektors in großen Tiefen unter Wasser, wenn die Taste 12 unter Wirkung des Wasserdrucks geklemmt wird.

Um die Lampe ein- und auszuschalten, sollte man die Taste im Betriebszustand drücken und gedrückt halten, bis die weiß leuchtende Leuchtdiode ein- und ausgeschaltet wird.

Um die Vorrichtung auszuschalten, sollte man die Taste im Betriebszustand drücken und bis zum ersten Tonsignal gedrückt halten. Der Betriebsmodus des Metalldetektors wird beim Ausschalten gespeichert und beim Einschalten automatisch wieder hergestellt.

Wird die Vorrichtung längere Zeit nicht benutzt (keine Tastendrücke und Metallauslösung), dann wird nach 5 Minuten die Signalfunktion bei Verlust aktiviert. Innerhalb von 40 Minuten signalisiert die Vorrichtung über ihren Standort mit Tonsignalen unterschiedlicher Tonfrequenz einmal alle 10 Sekunden, wobei die Batterieentladung ignoriert wird und danach die Vorrichtung ausschaltet.

Der Metalldetektor wird von der Stromquelle des Typs "Krona" mit einer Nennspannung von 9 V gespeist. Bei der Entladung des Einspeiseelements bis 7,5 V beginnt die zweifarbige Leuchtdiode gelb zu leuchten. Bei der Spannungssenkung der Einspeisung bis 7 V beginnt die zweifarbige Leuchtdiode rot zu leuchten. Bei der Spannungssenkung der Einspeisung unter 6,8 V wird der Metalldetektor automatisch ausgeschaltet.

Die Arbeitsfrequenz beträgt 12 kHz, die Entdeckungswahrscheinlichkeit 0,98. Der Betriebsstrom im Betriebszustand der Suche beträgt 7,5 mA, der Betriebsstrom im Energiesparzustand 0,5 mA, das Gewicht 0,16 kg, die Größe 231 x 45 x 41 mm, der Betriebstemperaturbereich -37 ... + 70° C und der Schutzgrad gegen das Eindringen von Fremdkörpern und Wasser IP68. Die maximale Tauchtiefe ohne Verwendung des automatischen Übergangs in den Energiesparzustand beträgt 7 m und die maximale Tauchtiefe beim automatischen Übergang in den Energiesparzustand 30 m.

Die verschiedenen Ausführungen des erfindungsgemäßen Metalldetektors umfassen somit folgende Komponenten und Funktionen:
1. einen Primärwandler (1),
2. eine elektronische Schaltung des Metalldetektors (9),
3. eine Stromquelle (5),
4. einen tragbaren Körper (22).
5. einen Block zum Bestimmen eines externen lokalen Magnetfeldes (7),
6. ein magnetisch empfindliches System (17),
7. das magnetisch empfindliche System umfasst vorzugsweise mindestens einen
   a) Hall-Wandler (19, 20) und/oder
   b) magnetoresistiven Wandler und/oder
   c) Reed-Schalter aufweisen,
8. Der Betriebszustand des Metalldetektors wird durch das Vorhandensein eines externen lokalen Magnetfeldes bestimmt.
9. Unter Einwirkung auf den Metalldetektor eines externen lokalen Magnetfeldes wird der Metalldetektor in den Energiesparzustand umgestellt.
10. Unter Einwirkung auf den Metalldetektor eines externen lokalen Magnetfeldes wird der Metalldetektor in den Aus-Zustand umgestellt.
11. Der Metalldetektor wird durch ein externes lokales Magnetfeld gesteuert.

## Patentansprüche

1. Handmetalldetektor mit einem Primärwandler (1), einer elektronischen Schaltung (9) und einer Stromquelle (5),
sowie einem Block (7) zum Erfassen des Vorhandenseins eines externen lokalen Magnetfeldes, der ein magnetosensitives System (17) enthält, wobei der Zustand des Handmetalldetektors durch die Einwirkung des Vorhandenseins des externen lokalen Magnetfeldes auf den Block (7) gesteuert wird
**dadurch gekennzeichnet, dass**
der Handmetalldetektor unter Einwirkung des externen lokalen Magnetfeldes in einen Energiesparzustand umgestellt wird,
der Handmetalldetektor mit einem Lagerplatz magnetisch verbunden ist,
wobei der Block (7), um einen Einfluss der Orientierung des Handmetalldetektors bei seiner Anordnung in den Lagerplatz auszuschließen, als magnetisch sensitive Elemente zwei Hall-Wandler HW 1 and HW 2 (19, 20) verwendet,
so dass der Handmetalldetektor eindeutig feststellen kann, ob er an seinem Lagerplatz angeordnet ist, oder verwendet wird.

2. Handmetalldetektor nach Anspruch 1,
**dadurch gekennzeichnet,**
**dass** der Metalldetektor ausgebildet ist, unter Einwirkung eines externen lokalen Magnetfeldes ausgeschaltet zu werden, welches durch eine im Lagerplatz des Metalldetektors platzierte Magnetfeldquelle erzeugbar ist.

3. Handmetalldetektor nach Anspruch 1,
**dadurch gekennzeichnet,**
**dass** als Sensorelemente des magnetisch empfindliches System Reed-Schalter vorgesehen werden.

4. Handmetalldetektor nach Anspruch 1,
**dadurch gekennzeichnet,**
**dass** magnetoresistive Wandler als empfindliche Elemente des magnetisch empfindlichen Systems verwendet werden.

## Claims

1. Handheld metal detector with a primary transducer (1), an electronic circuit (9) and a power source (5),
as well as a
block (7) for detecting the presence of an external local magnetic field, which contains a magnetosensitive system (17), wherein the state of the handheld metal detector is controlled by the effect of the presence of the external local magnetic field on the block (7)
**characterized in that**,
that
the handheld metal detector is switched to
an energy saving state under the influence of the external local magnetic field,
the handheld metal detector is magnetically connected to a storage place,
wherein the block (7), to exclude an influence of the orientation of the
handheld metal detector when it is arranged in the storage place
uses two Hall transducers HT 1 and HT 2 (19, 20) as magnetically sensitive elements,
so that the handheld metal detector can clearly determine whether it is arranged at its storage place, or is being used.

2. Handheld metal detector according to claim 1,
**characterized in that**,
that the metal detector is configured to be switched off under the influence of an external local magnetic field, which can be generated by a magnetic field source placed in the storage place of the metal detector.

3. Handheld metal detector according to claim 1,
**characterized in that**,
that reed switches are provided as sensor elements of the magnetically sensitive system.

4. Handheld metal detector according to claim 1,
**characterized in that**,
that magnetoresistive transducers are used as sensitive elements of the magnetically sensitive system.

## Revendications

1. Détecteur de métaux portatif avec un transducteur primaire (1), un circuit électronique (9) et une source d'alimentation (5),
ainsi qu'un
bloc (7) pour détecter la présence d'un champ magnétique local externe, qui contient un système magnétosensible (17), dans lequel l'état du détecteur de métaux portatif est contrôlé par l'effet de la présence du champ magnétique local externe sur le bloc (7)
**caractérisé en ce que**,
que
le détecteur de métaux portatif est commuté vers
un état d'économie d'énergie sous l'influence du champ magnétique local externe,
le détecteur de métaux portatif est connecté magnétiquement à un lieu de stockage,
dans lequel le bloc (7), pour exclure une influence de l'orientation du détecteur de métaux portatif lorsqu'il est disposé dans le lieu de stockage
utilise deux transducteurs à effet Hall HT 1 et HT 2 (19, 20) comme éléments magnétiquement sensibles,
de sorte que le détecteur de métaux portatif peut déterminer clairement s'il est disposé à
son lieu de stockage, ou s'il est en cours d'utilisation.

2. Détecteur de métaux portatif selon la revendication 1,
**caractérisé en ce que**,
**que** le détecteur de métaux est configuré pour être éteint sous l'influence d'un champ magnétique local externe, qui peut être généré par une source de champ magnétique placée dans le lieu de stockage du détecteur de métaux.

3. Détecteur de métaux portatif selon la revendication 1,
**caractérisé en ce que**,
**que** des interrupteurs à lames souples sont prévus comme éléments capteurs du système magnétiquement sensible.

4. Détecteur de métaux portatif selon la revendication 1,
**caractérisé en ce que**,
**que** des transducteurs magnétorésistifs sont utilisés comme éléments sensibles du système magnétiquement sensible.
